# EUROPÄISCHE PATENTANMELDUNG

(11) **EP 4 716 043 A1**
(43) Veröffentlichungstag der Anmeldung: **25.03.2026**
(21) Anmeldenummer: 25202448.4
(22) Anmeldetag: 16.09.2025
(51) Int. Cl.: H02H 3/14, H02H 3/33, H02H 5/12, H02H 7/26, H02H 3/16, H02H 5/10, H02H 7/28

(54) **SCHUTZVORRICHTUNGEN UND VERFAHREN FÜR DEN SCHUTZ GEGEN ELEKTRISCHEN SCHLAG IN EINEM STROMVERSORGUNGSSYSTEM MIT MEHREREN ENERGIEQUELLEN**

(30) Priorität: 23.09.2024 DE 102024127466
(71) Anmelder: Bender GmbH & Co. KG, 35305 Grünberg (DE)
(72) Erfinder: Hackl, Dieter, 35463 Fernwald (DE); Haub, Dennis, 35428 Langgöns (DE)
(74) Vertreter: advotec.

(57) **Zusammenfassung**

Die Erfindung betrifft Schutzvorrichtungen und Verfahren für den Schutz gegen elektrischen Schlag in einem AC-, 3AC- oder DC-Stromversorgungssystem, welches eine Haupteinspeisung und weitere Energiequellen aufweist. In einer ersten Ausführungsform ist an den weiteren Energiequellen jeweils eine Spannungsmesseinrichtung geschaltet. Durch eine jeweils an den weiteren Energiequellen angeordnete Signalisierungseinrichtung erfolgt eine Signalisierung einer Spannungsüberschreitung mittels eines Abschaltsignals, falls an der betreffenden weiteren Energiequelle die gemessene Spannung einen Spannungs-Grenzwert überschreitet. Eine zweite Ausführungsform umfasst jeweils eine an den weiteren Energiequellen angeordnete Fehlerstrom-Schutzeinrichtung zur Erkennung eines jeweiligen Fehler-Differenzstroms sowie eine jeweils an den weiteren Energiequellen geschaltete Messimpedanz zur Erzeugung des Fehler-Differenzstroms.

## Beschreibung

Die Erfindung betrifft Schutzvorrichtungen und Verfahren für den Schutz gegen elektrischen Schlag in einem AC-, 3AC- oder DC-Stromversorgungssystem, welches eine Haupteinspeisung und weitere Energiequellen aufweist, wobei an der Haupteinspeisung ein N-Leiter oder ein M-Leiter niederohmig mit einem Schutzleiter verbunden ist.

Ausgangspunkt der Betrachtungen ist ein Stromversorgungssystem, welches eine Netzform aufweist, bei der ein aktiver Leiter (N-Leiter in einem AC, 3AC-Stromversorgungssystem oder M-Leiter in einem DC-Stromversorgungssystem) niederohmig mit dem Schutzleiter verbunden ist. Mit dem Begriff niederohmig sind vorliegend alle Typen von Stromversorgungssystemen gemäß der Norm IEC60364-1:2005 Abschnitt "312.2 Types of system earthing" umfasst.

Das betrachtete Stromversorgungssystem stellt eine vorausgesetzte, beispielhafte Anwendungsumgebung für die erfindungsgemäßen Schutzvorrichtungen und deren zugrundeliegende Verfahren dar, ist aber nicht Bestandteil der Erfindung.

In einschlägigen Errichtungsnormen wird gefordert, dass die niederohmige Verbindung mit dem Schutzleiter nur an einem zentralen Punkt, dem zentralen Erdungspunkt, erfolgen darf, um zu vermeiden, dass ein Teil des Laststromes permanent über den Schutzleiter fließt.

Der Schutz gegen elektrischen Schlag in elektrischen Anlagen wird normativ durch geeignete Kombinationen von Basisschutz und Fehlerschutz sichergestellt.

Die Schutzvorkehrung für den Basisschutz verhindert das direkte Berühren unter Spannung stehender aktiver Teile der elektrischen Anlage, z.B. durch Isolierung oder ein Gehäuse. Die Schutzvorkehrung für den Fehlerschutz verhindert, dass im Fehlerfall eine gefährliche Berührungsspannung auftritt bzw. bestehen bleiben kann.

Unter bestimmten Bedingungen von äußeren Einflüssen und in speziellen Bereichen sind bei elektrischen Anlagen und Betriebsmitteln neben den Schutzvorkehrungen für den Basisschutz und den Fehlerschutz Maßnahmen für einen zusätzlichen Schutz vorgesehen. Insbesondere kann dieser zusätzliche Schutz nach der Norm IEC 60364-4-41 - entsprechend DIN VDE 0100-410 im Abschnitt 415.1 - durch den Einsatz einer Fehlerstrom-Schutzeinrichtung (RCD) mit einem Nenn-Auslösestrom ≤ 30 mA gewährleistet werden.

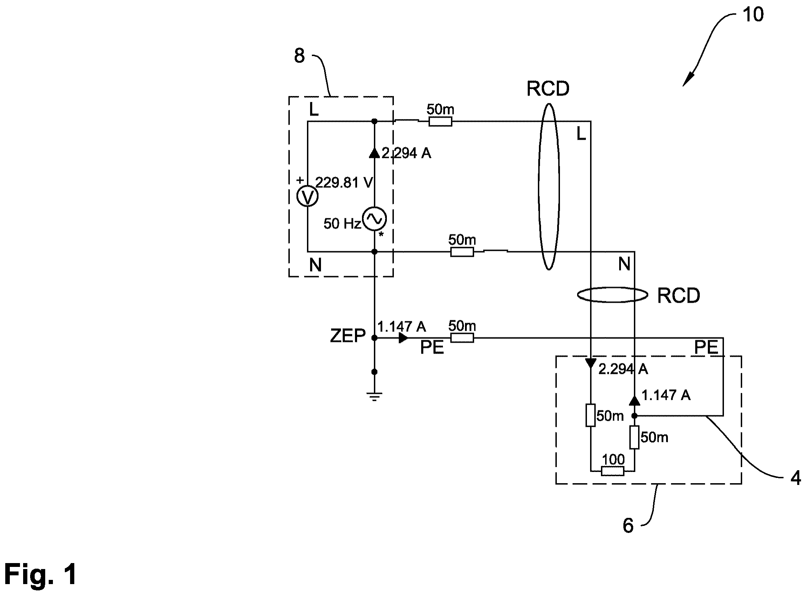

Die **Figuren 1****,** **2****,** **3****,** **4a****,** **4b****,** **5a** **und** **5b** zeigen Simulationsergebnisse der Strom- und Spannungsverteilung für unterschiedliche Fehlerfälle in einem über einen zentralen Erdungspunkt ZEP geerdeten, beispielhaften AC-Stromversorgungssystem 10, welches eine Haupteinspeisung 8 und weitere Energiequellen 12 aufweist.

Aus **Fig. 1** ist ersichtlich, dass in dem AC-Stromversorgungssystem 10 etwa der halbe Laststrom eines Verbrauchers 6 kontinuierlich über den Schutzleiter PE fließt, wenn neben dem zentralen Erdungspunkt ZEP eine weitere niederohmige Verbindung 4 an dem Verbraucher 6 zwischen dem N-Leiter und dem Schutzleiter PE besteht. Eine an der Haupteinspeisung 8 oder an dem Verbraucher 6 installierte Fehlerstrom-Schutzeinrichtung RCD allerdings würde die (fehlerhafte) Verbindung des N-Leiters mit dem Schutzleiter PE an dem Verbraucher 6 erkennen und sofort auslösen.

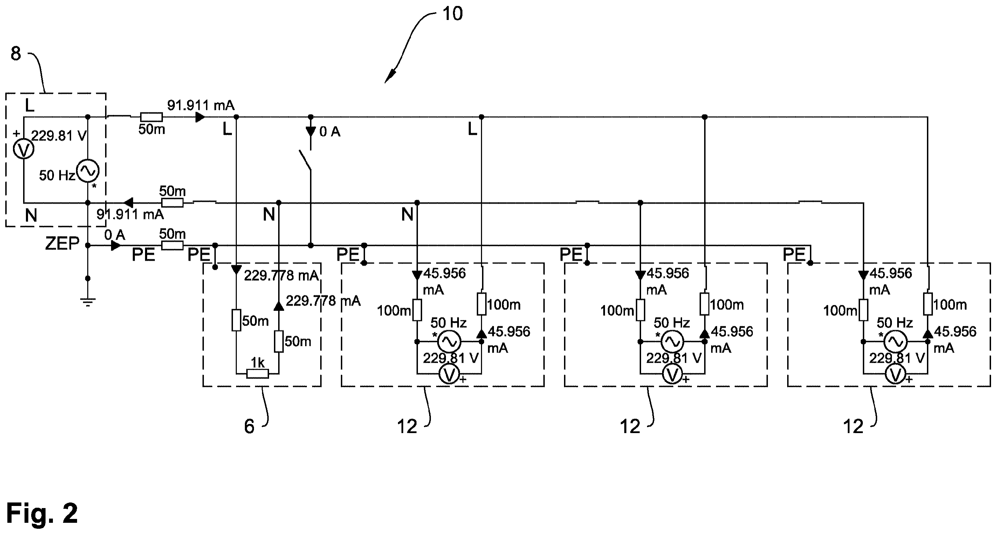

Besondere Betrachtung verdienen Stromversorgungssysteme 10, bei denen als Betriebsmittel nicht nur Energiesenken (Verbraucher 6), sondern neben der Haupteinspeisung 8 auch weitere Energiequellen 12 **(****Fig. 2****)** vorhanden sind. Auch für diese Ausführung der Stromversorgungssysteme 10 gilt die Anforderung aus den Errichtungsnormen, dass eine Verbindung zwischen dem N-/M-Leiter und dem Schutzleiter PE nur an dem zentralen Erdungspunkt ZEP erfolgen darf.

Als weitere Energiequellen 12, die zumindest zeitweise Energie einspeisen, gelten beispielsweise eine PV-Anlage (PV-Wechselrichter), eine rückspeisefähige (bidirektionale) Ladestation für ein Elektrofahrzeug (EV) oder ein elektrischer Energiespeicher (EES).

Fig. 2 zeigt ein derartiges - zunächst fehlerfreies - Stromversorgungssystem 10 mit einer entsprechenden Stromverteilung.

Kennzeichnend für diese Konfiguration des Stromversorgungssystems 10 im fehlerfreien Zustand ist die Aufteilung des über den Verbraucher 6 fließenden Laststromes auf alle aktiven Energiequellen 8, 12 (Haupteinspeisung 8 und weitere Energiequellen 12). Die Aufteilung des Laststromes wird dabei im Wesentlichen durch das Verhältnis der Innenwiderstände der Energiequellen 8, 12 und die Verteilung der Leitungswiderstände bestimmt. Die Innenwiderstände der weiteren Energiequellen 12 wiederum werden beispielsweise durch die Regelstrategien der eingesetzten Wechselrichter vorgegeben.

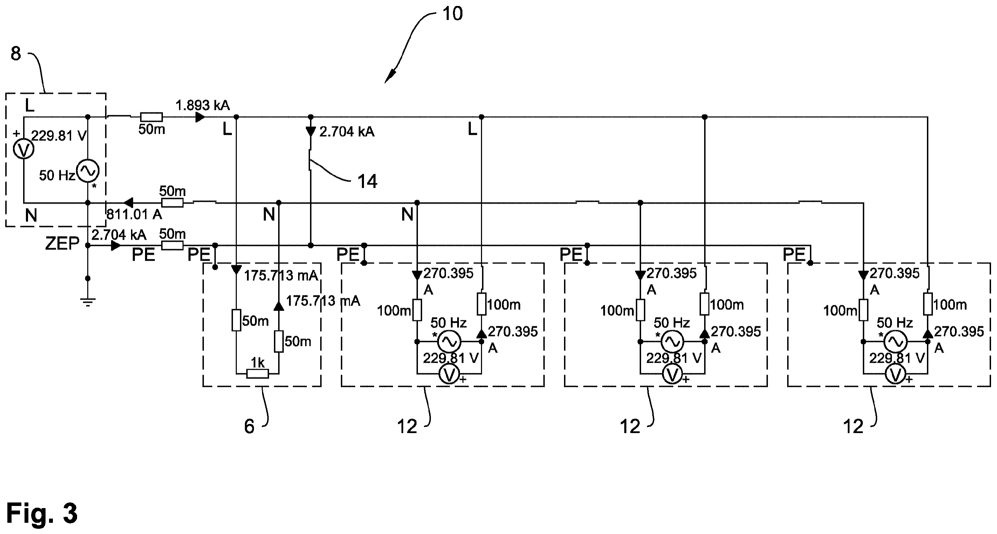

Tritt nun, wie in **Fig. 3** dargestellt, in einem solchen Stromversorgungssystem 10 ein Fehlerfall in Form eines Erdschlusses 14 in dem Hauptsystem auf, so müssen einige Besonderheiten berücksichtigt werden.

Der von der Haupteinspeisung 8 und den weiteren Energiequellen 12 getriebene gesamte Erdschlussstrom (Erdfehlerstrom über den Erdschluss 14) verteilt sich auf die im System aktiv vorhandenen Energiequellen 8, 12. Wie bei der Laststromverteilung ist auch die Erdschlussstrom-Verteilung von dem Verhältnis der Innenwiderstände und der Verteilung der Leitungswiderstände abhängig. Solange die Haupteinspeisung 8 aktiv ist, ist davon auszugehen, dass der überwiegende Teil des Erdfehlerstroms durch die Haupteinspeisung 8 verursacht wird.

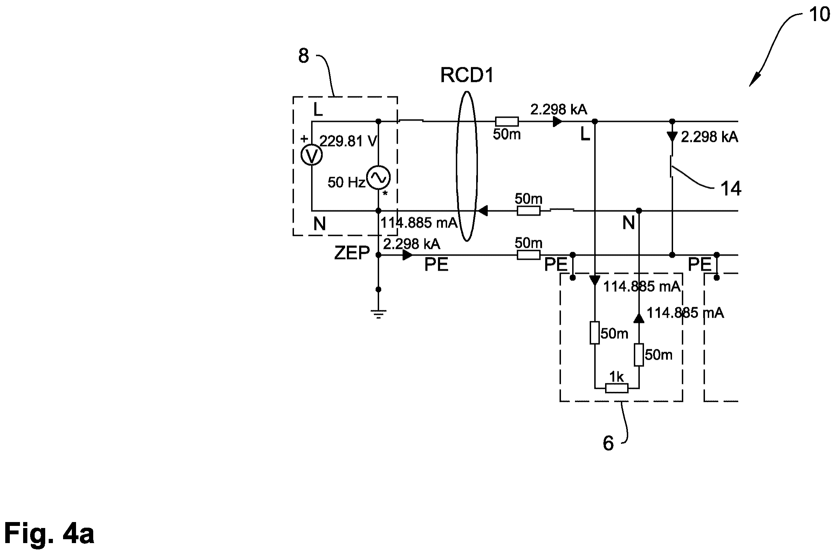

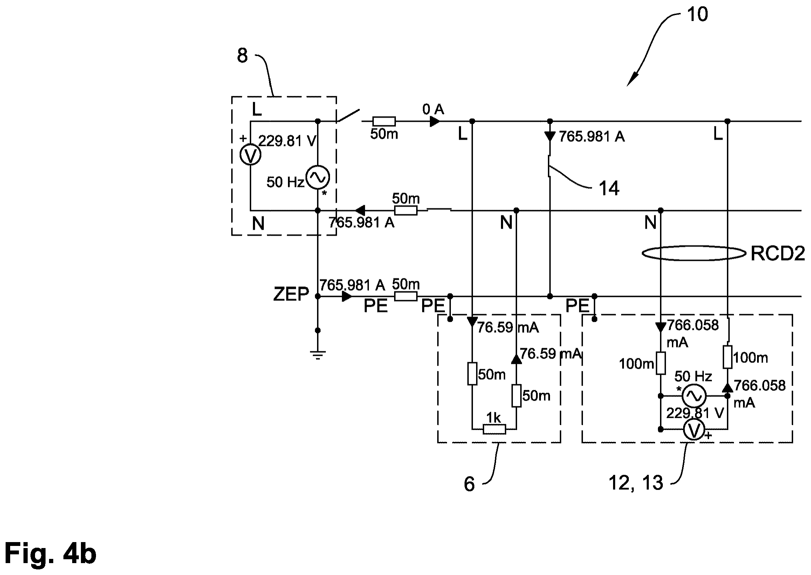

Ausgehend von dem in Fig. 3 dargestellten Fehlerfall (Erdschluss 14) ergibt sich nun, wie in **Fig.4a** und **Fig. 4b****.** gezeigt, eine weitere Besonderheit in Verbindung mit einer an der Haupteinspeisung 8 installierten Fehlerstrom-Schutzeinrichtung RCD1 (Fig. 4a) sowie mit einer an den jeweiligen weiteren Energiequellen 12 installierten Fehlerstrom-Schutzeinrichtung RCD2 (Fig. 4b).

Wie in Fig.4a dargestellt, entsteht erwartungsgemäß infolge des Erdschlusses 14 ein Differenzstrom in der Haupteinspeisung 8, der durch die Fehlerstrom-Schutzeinrichtung RCD1 erkannt wird und zur Trennung der Haupteinspeisung 8 führt.

Nach dem Trennen der Haupteinspeisung 8 wird der Erdschluss 14 durch den PV-Wechselrichter 13 als (beispielhafte) weitere Energiequelle 12 weiter gespeist (Fig. 4b). Bei intaktem N-Leiter bildet sich kein Differenzstrom an dem Anschluss des PV-Wechselrichters 13. Auf der Seite des PV-Wechselrichters 13 bildet sich zwischen dem N-Leiter und dem L-Leiter keine Stromdifferenz, wobei sich der Erdschlussstrom bedingt durch die Lage des zentralen Erdungspunktes ZEP an der Haupteinspeisung 8 über den Schutzleiter PE, den zentralen Erdungspunkt ZEP und den (intakten) N-Leiter fortsetzt. Es findet somit keine Auslösung der an dem PV-Wechselrichter 13 installierten Fehlerstrom-Schutzeinrichtung RCD2 statt.

Der Einsatz einer Fehlerstrom-Schutzeinrichtung RCD2 an dem PV-Wechselrichter 13, und allgemein an weiteren Energiequellen 12, wie beispielsweise an bidirektionalen EV-Ladestationen und an elektrischen Energiespeichern, bietet somit keinen zusätzlichen Schutz durch den oben beschriebenen normgemäß geforderten Einsatz einer Fehlerstrom-Schutzeinrichtung RCD2.

Allerdings wird eine an dem PV-Wechselrichter 13 installierte Überstrom-Schutzeinrichtung die automatische Abschaltung der Stromversorgung übernehmen.

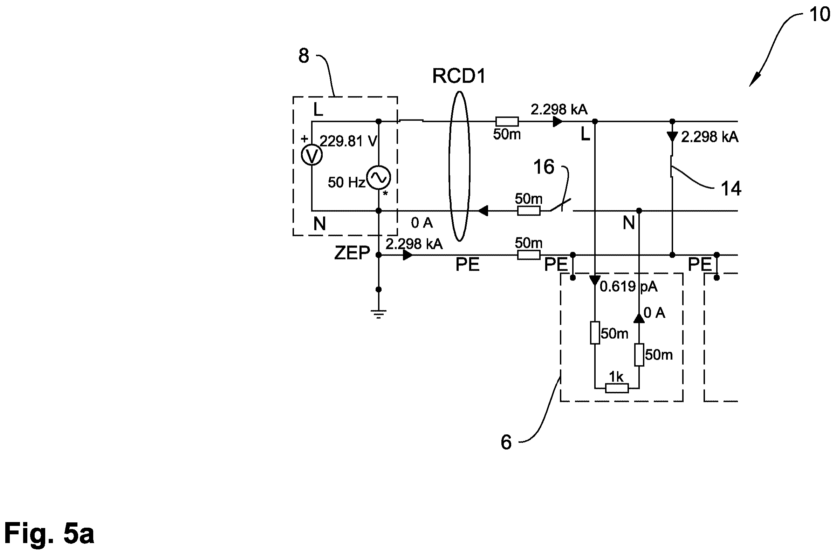

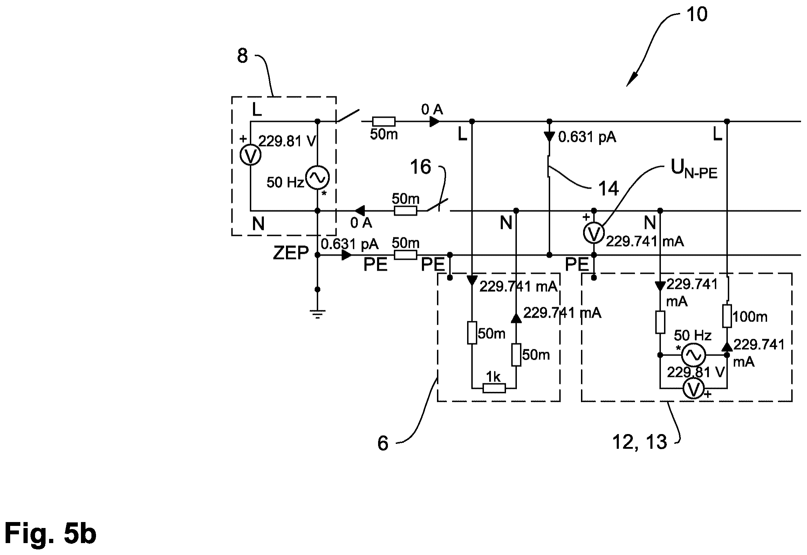

Bislang wurde von einem funktionsfähigen (intakten) N-Leiter ausgegangen. Tritt gemäß **Fig. 5a** in dem zugrunde gelegten Stromversorgungssystem 10 eine Unterbrechung 16 des N-Leiters auf, so funktioniert der zusätzliche Schutz mittels einer Fehlerstrom-Schutzeinrichtung RCD1 an der Haupteinspeisung auch bei bestehendem Erdschluss 14 in dem Hauptsystem weiterhin zuverlässig, da die an der Haupteinspeisung 8 installierte Fehlerstrom-Schutzeinrichtung RCD1 infolge der Verlagerung des Fehlerstroms von dem (von dem Messstromwandler der Fehlerstrom-Schutzeinrichtung RCD1 umschlossenen) N-Leiter auf den (von dem Messstromwandler nicht umschlossenen) Schutzleiter PE einen Differenzstrom erkennt.

Tritt hingegen die Unterbrechung 16 des N-Leiters auf, wenn, wie in **Fig.°5b** gezeigt, die Einspeisung ausschließlich durch eine oder mehrere der weiteren Energiequellen 12 erfolgt, funktioniert in dem dargestellten Erdschlussfall 14 auch die im Rahmen der Schutzmaßnahme "Automatische Abschaltung der Stromversorgung" an den weiteren Energiequellen 12 vorgesehene Abschaltung durch eine Überstrom-Schutzeinrichtung nicht mehr, da der benötigte Auslösestrom zu gering ist - vergleiche im Gegensatz dazu Fig. 4b, in der ein hinreichend hoher Stromfluss über den PV-Wechselrichter 13 zu erkennen ist, der zur automatischen Abschaltung der Stromversorgung durch die Überstrom-Schutzeinrichtung führt.

Infolge des Erdschlusses 14 verschiebt sich bei einer Unterbrechung 16 des N-Leiters die Spannung zwischen N-Leiter und Erde (N-Leiter-Schutzleiter-Spannung U_{N-PE}) in Richtung der vollen (Außen-) Leiterspannung (Phase-Phase-Spannung). Wenn die Betriebsmittel für diese Spannung nicht ausgelegt sind, kann ein Weiterbetrieb der elektrischen Anlage zu Schäden führen und die Entstehung eines Brandes begünstigen.

Ein aus dem Stand der Technik bekannter, in Sicherheitsgrundnormen gängiger Lösungsansatz besteht nun darin, zusätzlich zum Schutzerdungssystem einen Schutzpotentialausgleich vorzusehen. Dies ist eine teure Maßnahme und schützt nicht vor Verlagerung der Spannung zwischen N-Leiter und Schutzleiter in Richtung der vollen Phase-Phase-Nennspannung mit den beschriebenen Auswirkungen.

Ein öfters diskutierter Ansatz besteht in der Umschaltung des zentralen Erdungspunktes, wenn der Energiefluss aus der Haupteinspeisung abgeschaltet wird. Dies ist normativ nicht erlaubt.

Eine aus dem Korrosionsschutz von Pipelines und DC-Bahnstromversorgungen vorgesehene Möglichkeit ist eine mehrfache Verbindung von aktiven Leitern mit Erde über antiparallel geschaltete Diodenstrecken.

Schließlich nutzt ein weiterer Ansatz eine Kommunikations- oder Auslöseleitung zwischen den Schutzeinrichtungen aller Betriebsmittel und der Haupteinspeisung. Wenn dann im System an einer Stelle ein kritischer Zustand entdeckt wird, werden alle Schutzeinrichtungen ausgelöst.

Zusammenfassend lässt sich feststellen, dass keiner der derzeit bekannten Lösungsansätze zu einer technisch zufriedenstellenden und wirtschaftlich vertretbaren Lösung führt.

Der vorliegenden Erfindung liegt somit die Aufgabe zugrunde, für ein AC-, 3AC- und DC-Stromversorgungssystem mit einer Haupteinspeisung und weiteren Energiequellen sowie mit einem zentralen Erdungspunkt ZEP neue Schutztechniken zur elektrischen Sicherheit als zusätzlichen Schutz vorzusehen.

Diese Aufgabe wird in einer ersten Ausführungsform dadurch gelöst, dass jeweils an den weiteren Energiequellen zwischen den N- oder M-Leiter und den Schutzleiter eine Spannungsmesseinrichtung zur Messung einer N-Leiter-Schutzleiter-Spannung U_{N-PE} oder einer M-Leiter-Schutzleiter-Spannung U_{M-PE} geschaltet ist sowie durch eine jeweils an den weiteren Energiequellen angeordnete Signalisierungseinrichtung zur Signalisierung einer Spannungsüberschreitung mittels eines Abschaltsignals, falls an der betreffenden weiteren Energiequelle die N-Leiter-Schutzleiter-Spannung U_{N-PE} oder die M-Leiter-Schutzleiter-Spannung U_{M-PE} einen Spannungs-Grenzwert überschreitet.

Als erfindungswesentliche Elemente umfasst die erfindungsgemäße Schutzvorrichtung in dieser ersten Ausführungsform die Anordnung der Spannungsmesseinrichtung und der Signalisierungseinrichtung.

Die mit der Spannungsmesseinrichtung an der jeweiligen weiteren Energiequelle erfasste N-Leiter-Schutzleiter-Spannung oder M-Leiter-Schutzleiter-Spannung wird im Hinblick auf deren Größe in der Signalisierungseinrichtung einer Auswertung unterzogen. Übersteigt der gemessene Spannungswert einen voreinstellbaren Spannungs-Grenzwert, so wird diese Spannungsüberschreitung von der Signalisierungseinrichtung erkannt und mittels eines Abschaltsignals signalisiert. Das Abschaltsignal kann zur Ansteuerung einer Abschalteinrichtung oder zur Aktivierung weiterer normgemäß vorgeschriebener Schutzmaßnahmen dienen.

In weiterer Ausgestaltung ist eine jeweils an den weiteren Energiequellen angeordnete Abschalteinrichtung mit der jeweiligen Signalisierungseinrichtung zum Empfang des Abschaltsignals verbunden.

Die Abschalteinrichtung empfängt das von der Signalisierungseinrichtung im Fall der Spannungsüberschreitung gesendete Abschaltsignal und führt somit die Abschaltung der betreffenden weiteren Energiequelle aus.

In einer zweiten Ausführungsform wird die Aufgabe in Verbindung mit einer jeweiligen - zu der Erfindung gehörenden - an den weiteren Energiequellen angeordneten Fehlerstrom-Schutzeinrichtung (RCD) zur Erkennung eines jeweiligen Fehler-Differenzstroms dadurch gelöst, dass jeweils an den weiteren Energiequellen zwischen den N- oder M-Leiter und den Schutzleiter eine Messimpedanz zur Erzeugung des durch eine N-Leiter-Schutzleiter-Spannung U_{N-PE} oder eine M-Leiter-Schutzleiter-Spannung U_{M-PE} bewirkten Fehler-Differenzstroms geschaltet ist.

Die im Fehlerfall auftretende N-Leiter-Schutzleiter-Spannung oder M-Leiter-Schutzleiter-Spannung wird mittels einer zwischen den N- oder M-Leiter und den Schutzleiter erfindungsgemäß geschalteten Messimpedanz in einen auswertbaren Fehler-Differenzstrom umgewandelt. Dieser Fehler-Differenzstrom wird von der an der betreffenden weiteren Energiequelle erfindungsgemäß angeordneten Fehlerstrom-Schutzeinrichtung erkannt und sorgt dafür, dass diese Fehlerstrom-Schutzeinrichtung als zusätzliche Schutzmaßnahme zur Abschaltung der zu schützenden weiteren Energiequelle eingesetzt werden kann.

Zur Erfüllung der RCD-Funktion kann anstelle der Fehlerstrom-Schutzeinrichtung alternativ ein Differenzstrom-Überwachungsgerät (RCM) mit externem Schaltglied oder eine modulare Fehlerstrom-Schutzeinrichtung (MRCD) verbaut werden.

In weiterer Ausgestaltung sind die Messimpedanz und ein Schutzleiter-Anschluss integrale Bestandteile der Fehlerstrom-Schutzeinrichtung.

Durch den Einsatz einer mit der Messimpedanz und dem Schutzleiter-Anschluss erweiterten, derart modifizierten Fehlerstrom-Schutzeinrichtung kann die Erzeugung des auswertbaren Fehler-Differenzstroms in kompakter Bauausführung realisiert werden.

Bevorzugt ist die Messimpedanz größer als eine Fehlerschleifenimpedanz und kleiner als ein Quotient aus einer zulässigen Berührspannung und einem Nenn-Auslösestrom der installierten Fehlerstrom-Schutzeinrichtung.

Damit ist sichergestellt, dass zum einen der über die Messimpedanz fließende Fehler-Differenzstrom nicht als zusätzlicher Fehlerstrom wirksam wird. Zum anderen muss der Fehler-Differenzstrom hinreichend groß sein, um die Fehlerstrom-Schutzeinrichtung auszulösen.

Weiter kann die Schutzvorrichtung in der zweiten Ausführungsform eine Zeitschlitz-Steuerung aufweisen, welche die Messimpedanzen in Zeitintervallen zyklisch aktiviert.

Insbesondere in weitläufigen Stromversorgungssystemen mit sehr vielen erfindungsgemäß einzubringenden Messimpedanzen zwischen N-/M-Leiter und Schutzleiter wird vorgeschlagen, diese zyklisch in einem Zeitscheibenverfahren zu aktivieren, um einen zu großen Schutzleiterstrom im Gesamtsystem zu vermeiden.

Die Aktivierung kann insbesondere im Zusammenwirken mit der modifizierten Fehlerstrom-Schutzeinrichtung erfolgen, die mit dem Schutzleiter-Anschluss und der betriebsmittelseitig integrierten Messimpedanz ausgestattet ist.

Die Ausführung der zuvor beschriebenen erfindungsgemäßen Schutzvorrichtungen beruht auf den in den entsprechenden unabhängigen Verfahrensansprüchen beschriebenen verfahrenstechnischen Lehren. Insoweit treffen die vorgenannten technischen Wirkungen und daraus entstehenden Vorteile auch auf die Verfahrensmerkmale zu.

Die vorliegende Erfindung ermöglicht einen durchgängigen zusätzlichen (Fehler-)Schutz in AC, 3AC und DC-Stromversorgungssystemen mit zentralem Erdungspunkt und mit Betriebsmitteln, die als Energiequelle arbeiten. Unter Beachtung der gängigen Sicherheitsgrundnormen und Errichtungsnormen werden die normativ geforderten Schutzvorkehrungen für den Basisschutz und den Fehlerschutz im Hinblick auf die in Zukunft zunehmende Verbreitung von einspeisefähigen Betriebsmitteln ergänzt, wobei die Anwendung der zusätzlichen Schutzmaßnahmen nicht auf Sonderanwendungen beschränkt ist. Insbesondere lassen sich die vorgeschlagenen Maßnahmen bevorzugt in die Umrichter der angeschlossenen rückspeisefähigen Betriebsmittel integrieren. In einer speziell dafür ausgelegten Bauausführung weist der Umrichter hierfür die Messimpedanz und den Schutzleiter-Anschluss auf.

Auch die Integration der erfindungsgemäßen Schutzvorrichtungen in Fehlerstrom-Schutzeinrichtungen (RCD), in modulare Fehlerstrom-Schutzeinrichtungen (MRCD) oder in Differenzstrom-Überwachungsgerät (RCM) ist möglich.

Weitere vorteilhafte Ausgestaltungsmerkmale ergeben sich aus der nachfolgenden Beschreibung und den Zeichnungen, die eine bevorzugte Ausführungsform der Erfindung an Hand von Beispielen erläutern. Es zeigen:
- **Fig. 1:**: ein AC-Stromversorgungssystem mit Haupteinspeisung und zentralem Erdungspunkt,
- **Fig. 2:**: das AC-Stromversorgungssystem mit weiteren Energiequellen,
- **Fig. 3:**: das AC-Stromversorgungssystem bei einem Erdschluss,
- **Fig. 4a, 4b:**: das AC-Stromversorgungssystem bei einem Erdschluss mit einer Fehlerstrom-Schutzeinrichtung an der Haupteinspeisung (Fig. 4a) und an den weiteren Energiequellen (Fig. 4b),
- **Fig. 5a, 5b:**: das AC-Stromversorgungssystem bei einem Erdschluss und Unterbrechung des N-Leiters bei Haupteinspeisung (Fig.5a) und bei Einspeisung ausschließlich durch weitere Energiequellen (Fig. 5b),
- **Fig. 6a, 6b:**: das AC-Stromversorgungssystem bei einem Erdschluss mit erfindungsgemäßer Schutzvorrichtung in erster Ausführungsform bei Einspeisung ausschließlich durch weitere Energiequellen ohne Unterbrechung des N-Leiters (Fig. 6a) und mit zentraler Unterbrechung des N-Leiters (Fig. 6b),
- **Fig. 7:**: das AC-Stromversorgungssystem bei einem Erdschluss mit erfindungsgemäßer Schutzvorrichtung in erster Ausführungsform bei Einspeisung ausschließlich durch weitere Energiequellen mit teilweiser Unterbrechung des N-Leiters,
- **Fig. 8:**: das AC-Stromversorgungssystem bei einem Erdschluss mit erfindungsgemäßer Schutzvorrichtung in zweiter Ausführungsform bei Einspeisung ausschließlich durch weitere Energiequellen mit teilweiser Unterbrechung des N-Leiters und
- **Fig. 9:**: das AC-Stromversorgungssystem bei einem Erdschluss mit erfindungsgemäßer Schutzvorrichtung in zweiter Ausführungsform bei Haupteinspeisung und Einspeisung durch weitere Energiequellen.

Wie eingangs dargelegt, zeigen die Fig. 1, 2, 3, 4a, 4b, 5a und 5b Simulationsergebnisse der Strom- und Spannungsverteilung beispielhaft für ein über einen zentralen Erdungspunkt ZEP geerdetes AC-Stromversorgungssystem 10 mit einer Haupteinspeisung 8 und weiteren Energiequellen 12. Als Fehlerfall treten ein Erdschluss 14 sowie eine zentrale Unterbrechung 16 des N-Leiters auf. Die bei unterschiedlichen Fehlerkonstellationen (verursacht durch den Erdschluss 14 und die Unterbrechung 16 des N-Leiters) und Betriebszuständen (bedingt durch die Haupteinspeisung 8 und die Einspeisung durch weitere Energiequellen 12) teilweise unzureichenden Schutzmaßnahmen führen zu der oben gestellten Aufgabe, neue Schutztechniken zur elektrischen Sicherheit vorzusehen.

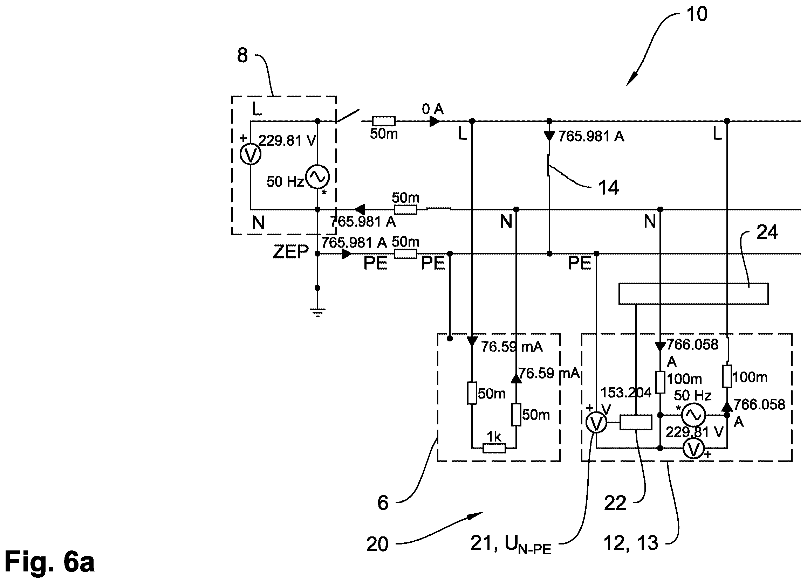

Die weiteren Darstellungen in den **Figuren 6a****,** **6b****,** **7****,** **8** und **9** beziehen sich auf die erfindungsgemäßen Schutzvorrichtungen und die zugrundeliegenden erfindungsgemäßen Verfahren.

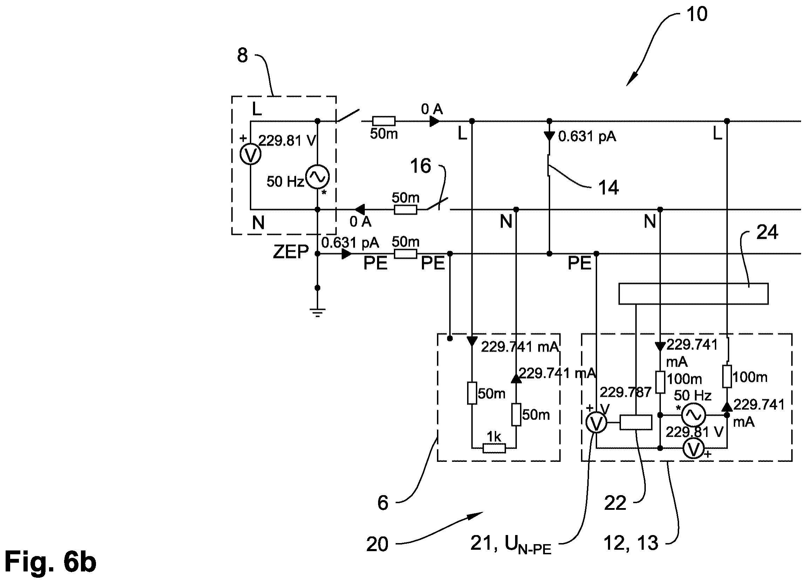

Die **Figuren 6a** und **6b** zeigen das AC-Stromversorgungssystem 10 bei einem Erdschluss 14 mit erfindungsgemäßer Schutzvorrichtung in erster Ausführungsform 20 bei Einspeisung ausschließlich durch weitere Energiequellen 12.

Zwischen den N-Leiter und den Schutzleiter PE ist erfindungsgemäß eine Spannungsmesseinrichtung 21 zur Messung einer N-Leiter-Schutzleiter-Spannung U_{N-PE} geschaltet. Sowohl für den Erdschlussfall 14 mit intaktem N-Leiter (Fig. 6a) als auch für den Erdschlussfall 14 mit zentraler Unterbrechung 16 des N-Leiters (Fig. 6b) stellt sich an dem als weitere Energiequelle 12 wirkenden PV-Wechselrichter 13 eine mittels der Spannungsmesseinrichtungen 21 erfasste N-Leiter-Schutzleiter-Spannung U_{N-PE} ein, die deutlich größer als eine maximal zulässige Fehlerspannung (Berührspannung) von 50 V ist. In einer an den weiteren Energiequellen (12) erfindungsgemäß angeordneten Signalisierungseinrichtung (22) wird die N-Leiter-Schutzleiter-Spannung U_{N-PE} ausgewertet und die Spannungsüberschreitung erkannt.

Das Messen und Auswerten der N-Leiter-Schutzleiter-Spannung U_{N-PE} kann zu einer automatischen Abschaltung des PV-Wechselrichters 13 mittels einer Abschalteinrichtung 24 oder zur Aktivierung weiterer normgemäß vorgeschriebener Schutzmaßnahmen genutzt werden und stellt somit einen zusätzlichen Schutz dar.

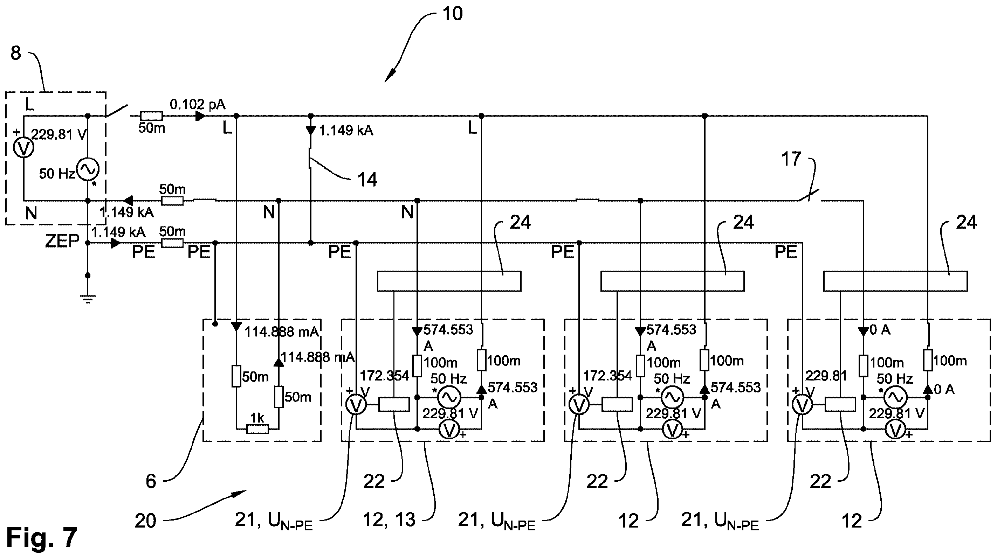

**Fig. 7** zeigt das AC-Stromversorgungssystem 10 bei einem Erdschluss 14 mit erfindungsgemäßer Schutzvorrichtung in erster Ausführungsform 20 bei Einspeisung ausschließlich durch weitere Energiequellen 12 mit teilweiser Unterbrechung 17 des N-Leiters.

Die erfindungsgemäße Schutzvorrichtung in erster Ausführungsform 20 umfasst in diesem Fall die Spannungsmesseinrichtung 21, die Signalisierungseinrichtung 22 und die Abschalteinrichtung 24 an jeder weiteren Energiequelle 12.

Aus der Spannungsverteilung geht hervor, dass in dem AC-Stromversorgungssystem 10 auch bei einer nur teilweisen Unterbrechung 17 des N-Leiters die N-Leiter-Schutzleiter-Spannung U_{N-PE} an allen weiteren Energiequellen 12 deutlich über der maximal zulässigen Fehlerspannung von 50 V liegt. Somit kann die gemessene N-Leiter-Schutzleiter-Spannung U_{N-PE} hier ebenfalls als Indikator zur Abschaltung der betreffenden Energiequelle oder zur Einleitung von weiteren Schutzmaßnahmen dienen.

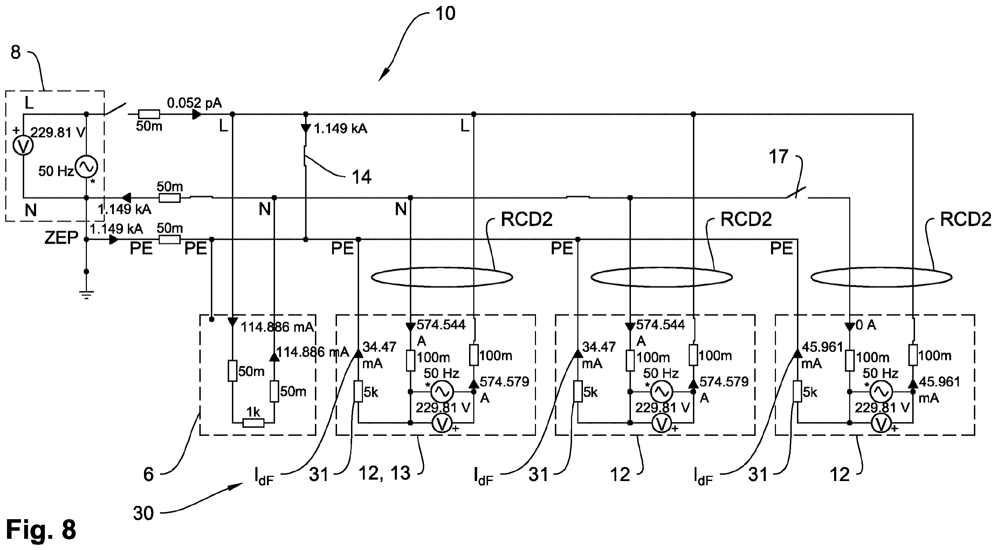

**Fig. 8** zeigt das AC-Stromversorgungssystem 10 bei einem Erdschluss 14 mit erfindungsgemäßer Schutzvorrichtung in zweiter Ausführungsform 30 bei Einspeisung ausschließlich durch weitere Energiequellen 12 mit teilweiser Unterbrechung 17 des N-Leiters.

An den weiteren Energiequellen 12 ist zwischen den N- Leiter und den Schutzleiter PE jeweils erfindungsgemäß eine Messimpedanz 31 geschaltet, die die N-Leiter-Schutzleiter-Spannung U_{N-PE} in einen auswertbaren Fehler-Differenzstrom I_{dF} überführt.

Die Simulationsergebnisse zeigen, dass eine richtig bemessene Messimpedanz 31 an der jeweiligen weiteren Energiequelle 12 im Fehlerfall einen Fehler-Differenzstrom I_{dF} erzeugt, der die an der betreffenden weiteren Energiequelle 12 erfindungsgemäß angeordnete Fehlerstrom-Schutzeinrichtung RCD2 auslösen kann.

Der Effekt, dass bei mehrfacher niederohmiger Verbindung des N-Leiters (M-Leiters in DC-Systemen) mit dem Schutzleiter PE - neben dem zentralen Erdungspunkt ZEP existiert beispielsweise ein Erdschluss 14 als niederohmige Verbindung - ein Teil des Laststromes über den Schutzleiter PE fließt und auch im fehlerfreien Zustand die Fehlerstrom-Schutzeinrichtung RCD2 auslöst, ist bei der erfindungsgemäßen Schutzvorrichtung in zweiter Ausführungsform 30 nicht zu erwarten, wenn die zwischen N-Leiter (M-Leiter in DC-Systemen) und Schutzleiter PE jeweils eingefügte Messimpedanz 31 an den weiteren Energiequellen 12 richtig ausgelegt ist.

Soll erfindungsgemäß eine automatische Abschaltung der Stromversorgung 10 durch Fehlerstrom-Schutzeinrichtungen RCD2 erfolgen, so sind die folgenden Dimensionierungsanforderungen für die Messimpedanzen 31 zwischen dem N-Leiter (M-Leiter in DC-Systemen) und dem Schutzleiter PE zu beachten:
1. Der Impedanzwert (ohmscher Widerstandswert in DC-Systemen) muss sehr viel größer als die Fehlerschleifenimpedanz sein. In dem simulierten Beispiel wurde der Faktor 10000 realisiert.
2. Der Impedanzwert (ohmsche Widerstandswert in DC-Systemen) muss kleiner sein als ein Quotient aus einer zulässigen Berührspannung U_{B} und einem Nenn-Auslösestrom I_{dn} der Fehlerstrom-Schutzeinrichtung RCD2 : |Z_{N-PE}| < U_{B}/I_{dn}, beispielsweise kleiner als 50V/30mA.

Soll erfindungsgemäß die N-Leiter-Schutzleiter-Spannung U_{N-PE} zwischen N-Leiter und Schutzleiter PE im Umrichter 12, 13 Schutzmaßnahmen nach IEC 60364-4-41 Anhang D.2 auslösen, so genügt es, den Impedanzwert möglichst hochohmig, aber ausreichend niederohmig auszulegen, um eine Fehlreaktion z. B. durch geringe kapazitive Einkopplungen zu vermeiden.

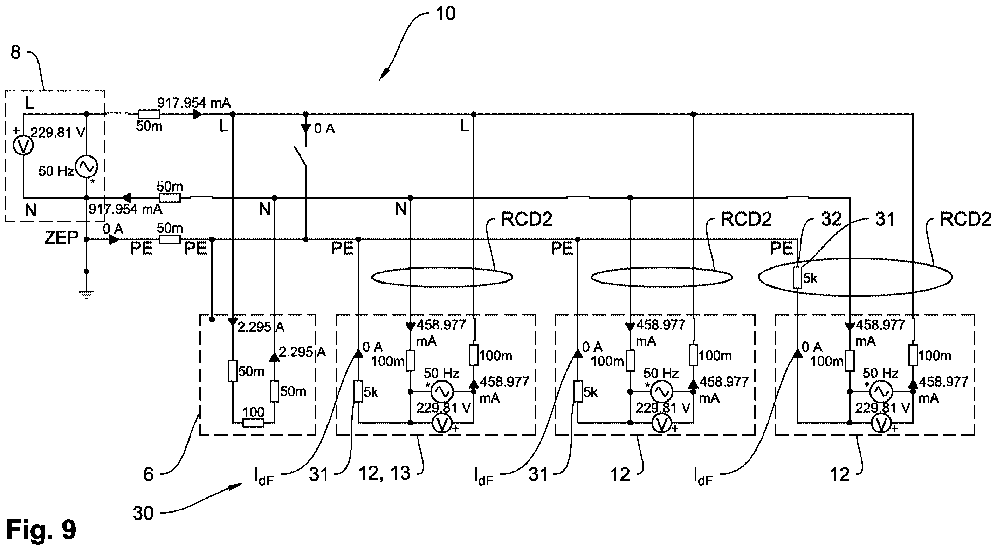

**Fig. 9** zeigt das AC-Stromversorgungssystem 10 bei einem Erdschluss mit erfindungsgemäßer Schutzvorrichtung in zweiter Ausführungsform 30 bei Haupteinspeisung 8 und Einspeisung durch weitere Energiequellen 12.

Dieser Betriebszustand stellt den Normalbetrieb des fehlerfreien Stromversorgungssystems 10 mit aktiver Haupteinspeisung 8 und bei Einspeisung durch weitere Energiequellen 12 dar. Der Darstellung zu entnehmen ist, dass der jeweilige Fehler-Differenzstrom I_{dF} an den weiteren Energiequellen 12 erwartungsgemäß 0A beträgt.

Die Fehlerstrom-Schutzeinrichtung RCD2 an der äußerst rechts eingezeichneten weiteren Energiequelle 12 ist beispielhaft als modifizierte Fehlerstrom-Schutzeinrichtung RCD2 ausgeführt und umfasst die Messimpedanz 31 und den Schutzleiter-Anschluss 32 als integrale Bestandteile.

## Patentansprüche

1. Schutzvorrichtung (20) für den Schutz gegen elektrischen Schlag in einem AC, 3AC oder DC-Stromversorgungssystem (10), welches eine Haupteinspeisung (8) und weitere Energiequellen (12) aufweist, wobei an der Haupteinspeisung (8) ein N-Leiter oder ein M-Leiter niederohmig mit einem Schutzleiter (PE) verbunden ist, **gekennzeichnet durch**
eine jeweils an den weiteren Energiequellen (12) zwischen den N- oder M-Leiter und den Schutzleiter (PE) geschaltete Spannungsmesseinrichtung (21) zur Messung einer N-Leiter-Schutzleiter-Spannung (U_{N-PE}) oder einer M-Leiter-Schutzleiter-Spannung (U_{M-PE}) und mit einer jeweils an den weiteren Energiequellen (12) angeordneten Signalisierungseinrichtung (22) zur Signalisierung einer Spannungsüberschreitung mittels eines Abschaltsignals, falls an der betreffenden weiteren Energiequelle (12) die N-Leiter-Schutzleiter-Spannung (U_{N-PE}) oder die M-Leiter-Schutzleiter-Spannung (U_{M-PE}) einen Spannungs-Grenzwert überschreitet.

2. Schutzvorrichtung (20) nach Anspruch 1,
**gekennzeichnet durch**
eine jeweils an den weiteren Energiequellen (12) angeordnete Abschalteinrichtung (24), welche mit der jeweiligen Signalisierungseinrichtung (22) zum Empfang des Abschaltsignals verbunden ist.

3. Schutzvorrichtung (30) für den Schutz gegen elektrischen Schlag in einem AC, 3AC oder DC-Stromversorgungssystem (10), welches eine Haupteinspeisung (8) und weitere Energiequellen (12) aufweist, wobei an der Haupteinspeisung (8) ein N-Leiter oder ein M-Leiter niederohmig mit einem Schutzleiter (PE) verbunden ist,
mit einer jeweils an den weiteren Energiequellen (12) angeordneten Fehlerstrom-Schutzeinrichtung (RCD2), zur Erkennung eines jeweiligen Fehler-Differenzstroms (I_{dF}),
**gekennzeichnet durch**
eine jeweils an den weiteren Energiequellen zwischen den N- oder M-Leiter und den Schutzleiter geschaltete Messimpedanz (31) zur Erzeugung des **durch** eine N-Leiter-Schutzleiter-Spannung (U_{N-PE}) oder eine M-Leiter-Schutzleiter-Spannung (U_{M-PE}) bewirkten Fehler-Differenzstroms (I_{dF}).

4. Schutzvorrichtung (30) nach Anspruch 3,
**dadurch gekennzeichnet,**
**dass** die Messimpedanz (31) und ein Schutzleiter-Anschluss (32) integrale Bestandteile der Fehlerstrom-Schutzeinrichtung (RCD2) sind.

5. Schutzvorrichtung (30) nach Anspruch 3 oder 4,
**dadurch gekennzeichnet,**
**dass** die Messimpedanz (31) größer als eine Fehlerschleifenimpedanz und kleiner als ein Quotient aus einer zulässigen Berührspannung (U_{B}) und einem Nenn-Auslösestrom der Fehlerstrom-Schutzeinrichtung (RCD2) ist.

6. Schutzvorrichtung (30) nach einem der Ansprüche 3 bis 5,
**gekennzeichnet durch**
eine Zeitschlitz-Steuerung, welche die Messimpedanzen (31) in Zeitintervallen zyklisch aktiviert.

7. Verfahren für den Schutz gegen elektrischen Schlag in einem AC, 3AC oder DC-Stromversorgungssystem (10), welches eine Haupteinspeisung (8) und weitere Energiequellen (12) aufweist, wobei an der Haupteinspeisung (8) ein N-Leiter oder ein M-Leiter niederohmig mit einem Schutzleiter (PE) verbunden ist,
umfassend die Verfahrensschritte,
Messen einer N-Leiter-Schutzleiter-Spannung (U_{N-PE}) oder einer M-Leiter-Schutzleiter-Spannung (U_{M-PE}) mittels einer zwischen den N- oder M-Leiter und den Schutzleiter (PE) geschalteten Spannungsmesseinrichtung (21),
Signalisieren einer Spannungsüberschreitung mittels eines Abschaltsignals durch eine jeweils an den weiteren Energiequellen (12) angeordnete Signalisierungseinrichtung (22), falls an der betreffenden weiteren Energiequelle (12) die N-Leiter-Schutzleiter-Spannung (U_{N-PE}) oder die M-Leiter-Schutzleiter-Spannung (U_{M-PE}) einen Spannungs-Grenzwert überschreitet.

8. Verfahren nach Anspruch 7,
**gekennzeichnet durch**
Abschalten der betreffenden weiteren Energiequelle (12) mittels einer jeweils an den weiteren Energiequellen (12) angeordneten Abschalteinrichtung (24), welche mit der jeweiligen Signalisierungseinrichtung (22) zum Empfang des Abschaltsignals verbunden ist.

9. Verfahren für den Schutz gegen elektrischen Schlag in einem AC, 3AC oder DC-Stromversorgungssystem (10), welches eine Haupteinspeisung (8) und weitere Energiequellen (12) aufweist, wobei an der Haupteinspeisung (8) ein N-Leiter oder ein M-Leiter niederohmig mit einem Schutzleiter (PE) verbunden ist,
umfassend die Verfahrensschritte,
Erzeugen eines durch eine N-Leiter-Schutzleiter-Spannung (U_{N-PE}) oder eine M-Leiter-Schutzleiter-Spannung (U_{M-PE}) bewirkten Fehler-Differenzstroms (I_{dF}) mittels einer jeweils an den weiteren Energiequellen (12) zwischen dem N- oder M-Leiter und dem Schutzleiter (PE) geschalteten Messimpedanz (31),
Abschalten der weiteren Energiequelle (12) mittels einer jeweils an den weiteren Energiequellen (12) angeordneten Fehlerstrom-Schutzeinrichtung (RCD2) zur Erkennung des jeweiligen Fehler-Differenzstroms (I_{dF}).

10. Verfahren nach Anspruch 9,
**dadurch gekennzeichnet,**
**dass** das Erzeugen des Fehler-Differenzstroms (I_{dF}) mit der Messimpedanz (31) erfolgt, wobei die Messimpedanz (31) und ein Schutzleiter-Anschluss (32) integrale Bestandteile der Fehlerstrom-Schutzeinrichtung (RCD2) sind.

11. Verfahren nach Anspruch 9 oder 10,
**dadurch gekennzeichnet,**
**dass** das Erzeugen des Fehler-Differenzstroms (I_{dF}) mit der Messimpedanz erfolgt, die größer als eine Fehlerschleifenimpedanz und kleiner als ein Quotient aus einer zulässigen Berührspannung und einem Nenn-Auslösestrom der Fehlerstrom-Schutzeinrichtung (RCD2) ist.

12. Verfahren nach einem der Ansprüche 9 bis 11,
**gekennzeichnet durch**
zyklisches Aktivieren der Messimpedanzen (31) in Zeitintervallen mittels einer Zeitschlitz-Steuerung.
